# EUROPEAN PATENT SPECIFICATION

(11) **EP 0 921 057 B1**
(45) Date of publication and mention of the grant of the patent: **24.09.2003**
(21) Application number: 98309919.3
(22) Date of filing: 03.12.1998
(51) Int. Cl.: B62D 55/21, B62D 55/26

(54) **Track link with flange for an endless track and a method for producing the same**
Gleiskettenglied mit Flansch für endlose Raupenkette und Verfahren zu dessen Herstellung
Maillon de chenille avec flasque pour chenille sans fin et procedé de fabrication

(30) Priority: 04.12.1997 JP 33388497; 02.07.1998 JP 18742498; 29.10.1998 JP 30821998
(43) Date of publication of application: 09.06.1999
(73) Proprietor: Topy Kogyo Kabushiki Kaisha, Tokyo 102-8448 (JP)
(72) Inventor: Takeno, Hiroyuki, c/o Topy kogyo Kabushiki Kaisha, Chiyoda-ku, Tokyo (JP); Nakajima, Masahiro, c/o Topy Kogyo Kabushiki K., Chiyoda-ku, Tokyo (JP); Yoshida, Isao, c/o Topy Kogyo Kabushiki Kaisha, Chiyoda-ku, Tokyo (JP); Niitsu, Hirokatsu, c/o Topy Kogyo Kabushiki Kaisha, Chiyoda-ku, Tokyo (JP)
(74) Representative: Paget, Hugh Charles Edward

(56) References cited:
- FR-A- 768 568
- US-A- 5 183 318

## Description

The present invention relates to (a) a track link with a flange for an endless track for vehicles such as a bulldozer, an excavator and the like, (h) an endless track having a main portion identical therewith, and (c) a method for producing a track link with a flange for an endless track.

For an endless track, usually an endless track having steel shoes fastened to steel links by bolts or by welding is used. However, when a vehicle mounted with the endless track having the steel shoes travels into urban areas, the steel shoes tend to damage the paved surface of the road.

As a countermeasure therefor, in a case of an endless track of a small size, a rubber crawler having reinforcing iron wire rods or an iron core embedded in a rubber member, or an endless track provided with composite shoes which include a steel shoe and an elastic member of rubber or urethane fixed to the ground opposing surface of the shoe and are fastened to steel links by bolts are sometimes used.

However, in the case where the rubber crawler is used and when the vehicle mounted with the endless track is operated on a slope or a rough road, the endless track is sometimes derailed from the vehicle causing a temporary stop of operation. Further, even if the rubber crawler is only partially damaged, since partial replacement of the damaged portion only is impossible, the entire rubber crawler needs to be exchanged. Accordingly, much cost and work is required for its replacement.

On the other hand, in the case of the composite shoes, since partial replacement is possible, the aforementioned problem associated with the rubber crawler can be solved. However, a problem of strength like that with the conventional steel track still remains unsolved. That is, in the case of an endless track of a small size, it is difficult to ensure space for shoe-bolt holes for bolts fastening a shoe to a link in a contact surface of the link with the shoe. If the shoe-bolt holes are formed in the link, a crack will be generated in a shoe-bolt hole surrounding portion in the contact surface of the link with the shoe during use. With the conventional steel shoe, a necessary strength can be obtained by welding the link and the shoe. However, with the composite shoe, the problem of strength cannot be solved, because if the composite shoe is welded with the link, the elastic member would separate from the steel shoe or melt due to the heat of the welding; therefore, welding cannot be used.

FR 768, 568 which shows the features of the preamble of claim 1 discloses a link having a flange in which holes are formed. The flange has a portion that is connected to the link of right angles. The flange then continues at an oblique angle to the link.

An object of the present invention is to provide (a) a track link for an endless track for use in an endless track which has a steel shoe including an elastic member of rubber or urethane covering its ground opposing surface, the track link having a sufficient contact area with the shoe, thereby improving a coupling strength, (b) an endless track mounted with the track link, and (c) a method for producing the track link with a flange.

Accordingly there is provided a track link according to claim 1, an endless track according to claim 6 and methods according to claims 8, 11 and 14.

The above and other objects, features, and advantages of the present invention will become more apparent and will be more readily appreciated from the following detailed description of the preferred embodiments of the present invention in conjunction with the accompanying drawings, in which:
FIG. 1 is a plane view of a track link with a flange for an endless track according to an embodiment of the present invention;
FIG. 2 is a front view of the track link with a flange of FIG. 1;
FIG. 3 is a plane view of a shoe of an endless track according to an embodiment of the present invention;
FIG. 4 is a cross-sectional view of the shoe, taken along line A - A of FIG. 3;
FIG. 5 is a front view of the shoe of FIG. 3;
FIG. 6 is a cross-sectional view of a shoe of the endless track according to another embodiment of the present invention;
FIG. 7 is a partial plane view of an endless track according to an embodiment of the present invention;
FIG. 8 is a front view of the endless track of FIG. 7;
FIG. 9 is a perspective view of material for a track link with a flange produced by a production method according to an embodiment of the present invention, in a case where the material is an angle member;
FIG. 10 is a perspective view of material for a track link with a flange produced by a production method according to an embodiment of the present invention, in a case where the material is a bent member;
FIG. 11 is a perspective view of material for a track link with a flange produced by a production method according to an embodiment of the present invention, in a case where the link material is a welded member;
FIG. 12 is a perspective view illustrating the angle member after cutting and a frame of the track link with flange on the angle member taken in the method according to the embodiment of the present invention;
FIG. 13 is a perspective view illustrating the angle member after forming the flange in the method according to the embodiment of the present invention;
FIG. 14 is a perspective view illustrating the angle member after forming the link in the method according to the embodiment of the present invention;
FIG. 15 is a perspective view illustrating the track link with a flange after bending the link in the method according to the embodiment of the present invention; and
FIG. 16 is a perspective view illustrating the angle member after cutting and another flame different from FIG. 12 of the track link with a flange on the angle member taken in the method according to the embodiment of the present invention.

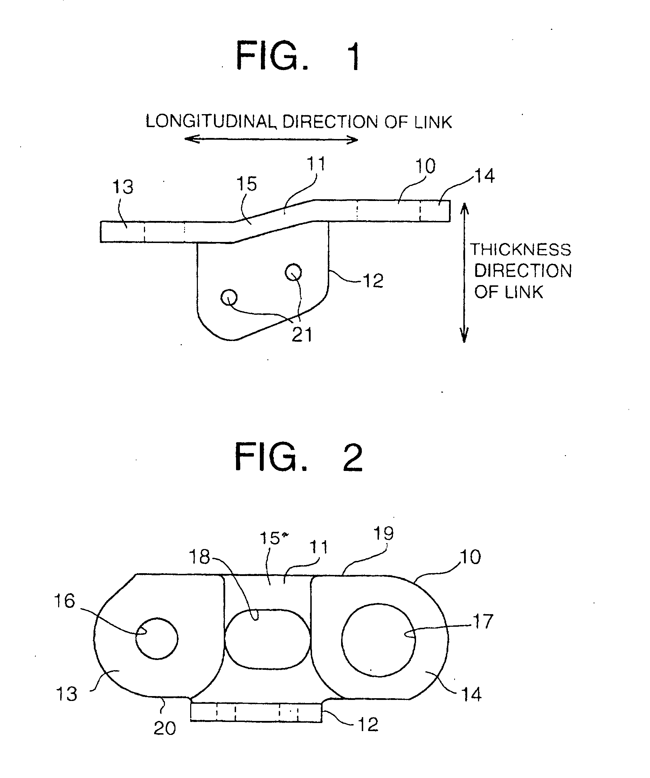

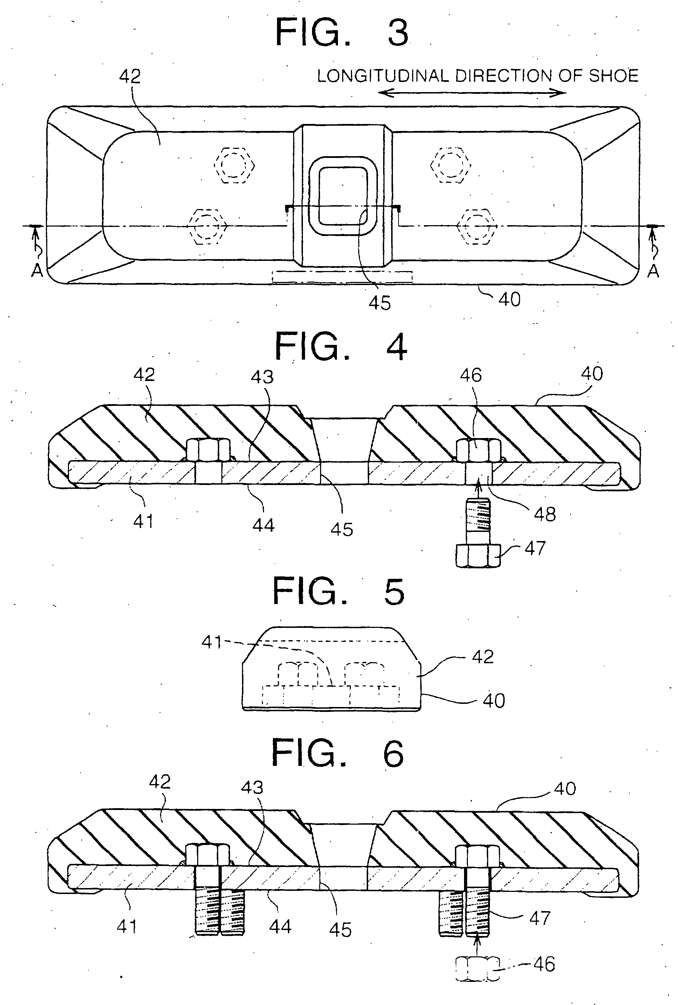

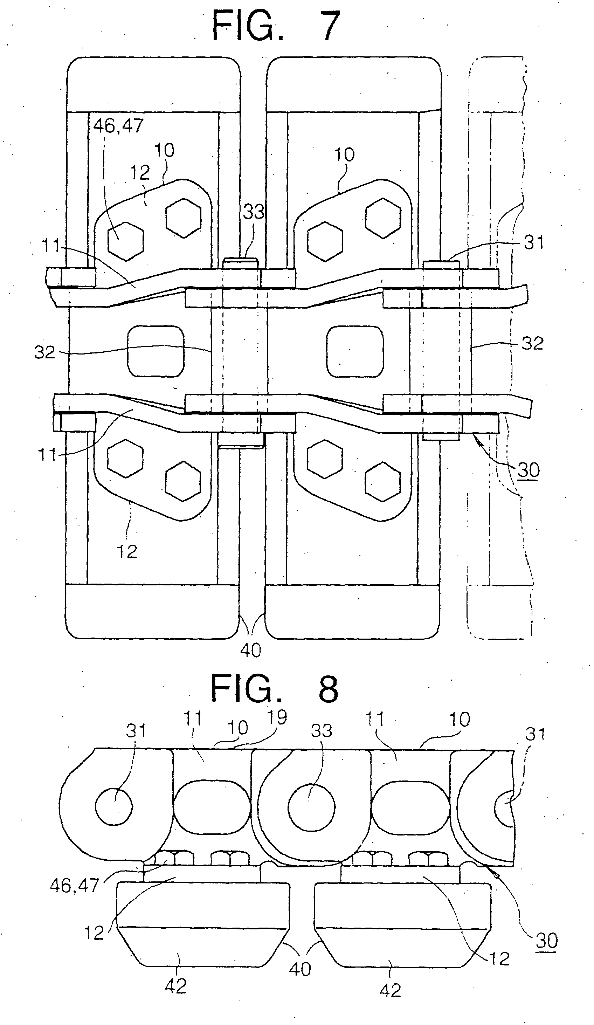

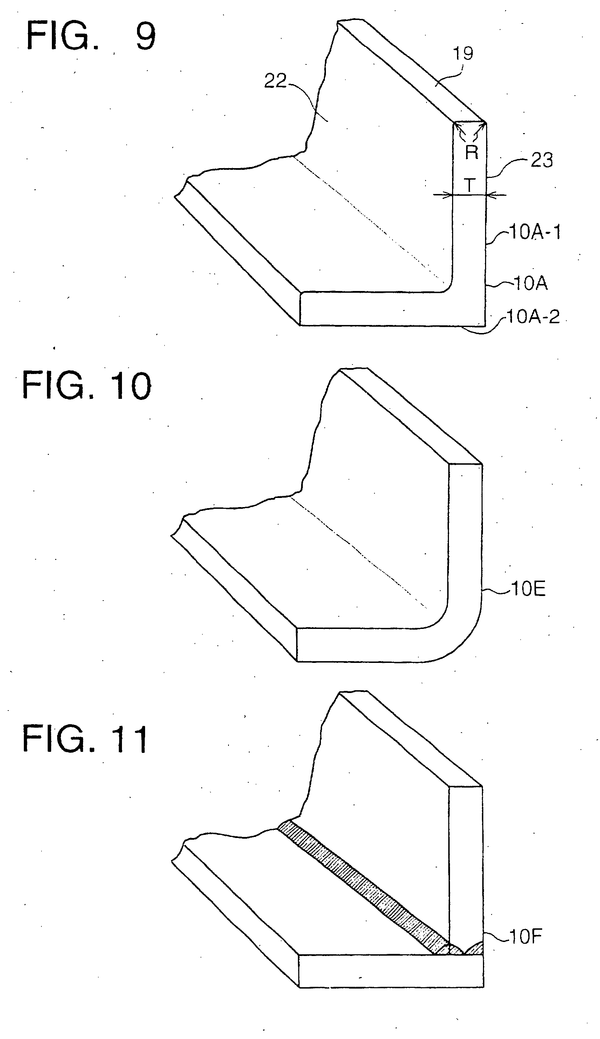

FIGS. 1 and 2 illustrate a track link with flange for an endless track according to an embodiment of the present invention; FIGS. 3 - 6 illustrate a shoe in which its ground opposing surface is covered with an elastic member; FIGS. 7 and 8 illustrate an endless track according to an embodiment of the present invention; and FIGS. 9 - 16 illustrate a production method for a track link with flange for an endless track according to an embodiment of the present invention.

First, a track link with flange for an endless track according to an embodiment of the present invention will he explained with reference to FIGS. 1 and 2,

A track link with flange 10 for an endless track includes a link 11 and a flange 12 integrally formed with the link 11. The track link with flange 10 is fastened to a shoe at the flange 12 by bolts and nuts.

The link 11 includes two opposite end portions 13 and 14 parallel with each other and displaced from each other in a thickness direction of the link 11 (T direction) and in a longitudinal direction of the link 11 (L direction), and an intermediate portion 15 located between the two end portions 13 and 14. The intermediate portion 15 is inclined with respect to the two opposite end portions 13, 14 and is integrally formed therewith. A pin hole 16 is punched in one end portion of the two opposite end portions 13 and 14, and a bushing hole 17 having a diameter greater than the pin hole 16 is punched in another end portion of the two opposite end portions 13 and 14. A mud hole 18 for removing mud is punched in the intermediate portion 15.

The flange 12 has a desired length and a desired width. The flange 12 is bent at a right angle with respect to the intermediate portion 15 of the link 11 at a connecting portion with the intermediate portion 15 of the link 11, and extends away from the intermediate portion 15 in a direction perpendicular to a direction in which the two opposite end portions 13 and 14 extend.

As illustrated in FIG. 2, the flange 12 is located further from a roller contact surface 19 by a thickness of the flange 12 than a plane connecting the end surfaces 20 of the two end portions 13 and 14 opposite to the roller contact surface 19 in a direction away from the roller contact surface 19. Contrarily, the flange 12 may he located closer to the roller contact surface 19 by its thickness than the plane connecting the end surfaces 20 of the two end portions 13 and 14 opposite to the roller contact surface 19.

Shoe-bolt holes 21 for causing bolts for fastening and fixing to the track link with flange 10 to a shoe to pass through are punched in the flange 12. A number of the shoe-bolt holes 21 is usually two per one track link with flange 10. A line connecting centers of the two shoe-bolt holes 21 is substantially parallel to the intermediate portion 15.

The link with flange 10 is made from a rolled steel plate.

Preferably, the track link with flange 10 is made from an angle member 10A (see FIG. 9) made by cutting an angle and having a cross-section including two legs perpendicular to each other. The angle member may he selected from any one of an angle having equal width and equal thickness legs, an angle having equal width and unequal thickness legs, an angle having unequal width and equal thickness legs, and an angle having unequal width and unequal thickness legs. In a case where the track link with flange 10 is made from the angle member 10A, one leg 10A - 1 of the angle member 10A is formed into the link 11 and another leg 10A - 2 of the angle member 10A is formed into the flange 12.

The material for the track link with flange 10 may include materials other than the angle member, for example, a bent member 10E formed by bending a steel plate at a central portion in a width direction of the steel plate at a right angle (see FIG. 10), or a welded member 10F formed by welding the two steel plates perpendicularly to each other (see FIG. 11). The bent member 10E has two half-width portions, one of which is formed into the link 11 and another of which is formed into the flange 12. Similarly, the welded member 10F has two legs, one of which is formed into the link 11 and another of which is formed into the flange 12. In the case of the bent member 10E, hole-punching may he conducted prior to bending, or bending may be conducted prior to hole-punching. In the case of the welded member 10F, configurations of the link 11 and the flange 12 may be first formed by punching followed by welding of the link 11 with the flange 12, or two steel plates may he first welded perpendicularly to each other followed by formation of configurations of the flange 12 and link 11 by punching.

The link 11 includes the roller contact surface 19 at an end of the link opposite to another end of the link having the end surface 20 where the flange 12 is integrated with the link 11. As illustrated in FIG. 9, the link 11 has side surfaces 22 and 23 connected to the roller contact surface 19 via comers having a radius (R) and defining a thickness (T) of the link 11 therebetween. The following relationship holds between the radius (R) and the thickness (T) : R ≦ (T / 2 - 1). The relationship is preferred when using the angle member 10A as a material for the track link with flange 10. An endurance test was conducted by varying the value of R to 3.5 mm, 4.0 mm, 4.5 mm, and 5.0 mm. while T was maintained to he 10 mm. The test result showed that a satisfactory durability was obtained when value of R was equal to or less than 4.0 mm. The above-discussed relationship was thus determined based on the test results.

Next, effects of the track link with flange 10 will be explained.

Since the link with flange 10 includes the flange 12 integrally formed therewith and contacts the shoe at the flange 12, an contact area between the flange 12 and the shoe is larger than that of the conventional link which contacts a shoe at a link. Further, since the shoe-bolt holes 21 are formed in the flange 12 having a relatively large area, a relatively large area can he ensured for a portion where the shoe-bolt holes are punched compared with the conventional link where boltholes are formed in the link. As a result. the fastening strength of the track link with flange 10 with respect to the shoe is improved.

In the case where the track link with flange 10 is made from the angle member 10A, a welding step is not required for forming the angle member 10A into the track link with flange 10, so that a crack caused at a weld, which tends to occur in a case where a link is fixed to a shoe by welding, can be avoided. Further, since bending the steel plate is not necessary compared with the case where a link with flange is formed by bending a steel plate, a satisfactory rectangularity of the flange with respect to the link can he obtained and a satisfactory flatness of the flange is obtained. As a result, the flange and the shoe contact each other well thereby improving the fastening strength of the link with flange with respect to the shoe.

In addition, since the relationship : R ≦ (T / 2 - 1) holds between the radius (R) and the thickness (T), a necessary flat area can be ensured to the roller contact surface, so that the durability of a vehicle mounted with the endless track can be improved.

In the case where the track link with flange 10 is made from the bent member 10E, a steel plate, which is cheap, can be used. In the case where the track link with flange 10 is made from the welded member 10F, a satisfactory rectangularity is ensured at the portion where the flange is integrally connected to the link.

Next, an endless track according to another embodiment of the present invention will be explained with reference to FIGS. 3 - 8.

As illustrated in FIGS. 7 and 8, an endless track 30 includes a plurality of track links with flange 10 endlessly connected with each other by a pin 31 and a bushing 32, and a plurality of shoes 40 each fastened and fixed to each of the plurality of track links with flange 10 by bolts 47 and nuts 46. The bolts 47 extend through the shoe-bolt holes 21 formed in the flange 12 of the link with flange 10 and the nuts 46 are threaded to the holts 47. One pin 33 among a plurality of pins 31 is a master pin 33.

Each track link with flange 10 has the same structure and effects as the track link with flange 10 as discussed above.

As illustrated in FIGS. 3 - 6, each shoe 40 includes a metal plate 41 having a ground opposing surface 43 and an elastic member 42 fixed to the metal plate 41 so as to cover at least a portion of the ground opposing surface 43 of the metal plate 41 except a portion of a mud hole 45. The elastic member 42 covers end surfaces and inside surfaces (inwardly opposing surfaces with respect to the endless track) of opposite longitudinal end portions of the metal plate 41 (i.e., in a direction perpendicular to a longitudinal direction of endless track).

The elastic member 42 is mainly made from a resin having elasticity, for example, natural rubber, synthetic rubber, urethane rubber and other resins having elasticity. For example, the elastic member 42 is made from styrene-butadiene rubber mixed with carbon black. The elastic member 42 is fixed to the metal plate 41 by, for example, vulcanization-adherence.

The metal plate 41 is made from, for example, a steel plate, and has a flat or desiredly formed configuration.

Preferably, the metal plate 41 of the shoe 40 is made from low-carbon boron steel containing 0.05 - 0.30% carbon by weight, and is preferably heat-treated by a heat-treatment including quench-hardening only (not including tempering), which enables a metal plate having a satisfactory strength and toughness to be manufactured at a low cost.

The shoe 40 is fastened and fixed to the track link with flange 10, by putting a surface opposite to the ground opposing surface 43 of the metal plate 41 into contact with the flange 12 of the link with flange 10. A contact surface 44 of the metal plate 41 with the flange 12 is not covered with the elastic member 42, and contacts the flange 12 directly.

The shoe 40 includes the mud hole 45 formed in a central portion in a longitudinal direction of the shoe.

A fastening structure of the metal plate 41 with the flange 12 is as follows: That is, as illustrated in FIGS. 3 - 5, the nut 46 is fixed to the metal plate 41 by welding. The nut 46 is fixed to the ground opposing surface 43 of the metal plate 41 by welding. The metal plate 41 welded with the nut 46 is set in a die. Then, a molten elastic material is injected into the die to form the elastic member 42, so that the nut 46 is covered with the elastic member 42 and buried therein. A bolthole 48 is formed in the metal plate 41 so that axes of the shoe-bolt holes 21 and 48 coincide with an axis of the nut 46 one another. The bolt 47 is inserted through the shoe-bolt hole 21 of the flange 12 and then through the bolthole 48 of the metal plate 41 from a flange contact surface 44 side of the metal plate 41 and threaded to the nut 46, thereby fastening the track link with flange 10 to the shoe 40. Preferably, the bolt 47 is stack-welded to the flange 12.

The above-discussed fastening structure of the metal plate 41 with the flange 12 may be replaced by the following structure. That is, as shown in FIG. 6, a head of the bolt 47 is fixed to the ground opposing surface 43 of the metal plate 41 by welding, and the thread portion of the bolt is extended through the bolthole 48 of the metal plate 41. Then, the molten elastic material is injected into the die to form the elastic member 42. The head of the bolt 47 is buried in the elastic member 42. The thread portion of the bolt 47 is inserted through the shoe-bolt hole 21 of the flange 12 and the nut 46 is threaded to the bolt 47, thereby fastening the track link with flange 10 to the shoe 40. Preferably, the nut 46 is stack-welded to the flange 12.

As illustrated in FIGS. 7 and 8, two track links with flange 10 are fastened to each shoe 40. The two track links with flange 10 are fastened to the shoe 40 are symmetric with each other with respect to a line passing through a center of the shoe 40, extending in a longitudinal direction of an endless track 30. The two track links with flange 10 are opposed to each other.

The direction of the flange 12 is as follows: That is, respective flanges 12 of the two paired track links with flange 10 fastened to each shoe 40 extend from the corresponding link 11 in a direction away from the opposite track link with flange 10. Contrarily, the respective flanges 12 of the two paired track links with flange 10 may extend from the corresponding link 11 in the direction toward the opposite track link with flange 10.

As illustrated in FIGS. 7 and 8, adjacent two links with flange 10 adjacent each other in the longitudinal direction of the endless track 30 are connected with each other in a longitudinal direction of the endless track 30 by the pin 31 and the bushing 32.

More particularly, an axis of a pin hole 16 of one of adjacent two track links with flange 10 adjacent each other in a longitudinal direction is caused to coincide with an axis of a hushing hole 17 of another of adjacent two track links with flange 10, and then opposite end portions of the bushing 32 are pushed into the bushing holes 17 of the paired track links with flange 10 opposing each other in a direction perpendicular to the longitudinal direction of the endless track 30. At the same time, opposite end portions of the pin 31 are pushed into the pin holes 16 of the paired track links with flange 10 opposing each other in a direction perpendicular to the longitudinal direction of the endless track 30. By the bushing 32 and the pin 31, the two track links with flange 10 adjacent each other in the longitudinal direction of the endless track 30 arc connected with each other. In the structure, the pin 31 extends through the bushing 32.

The endless track 30 is thus manufactured by endlessly connecting a plurality of track links with flange 10. The endless track 30 contacts a road surface at the elastic member 42 of the shoe 4() and contacts the roller of the vehicle at the roller contact surface 19 of the link 11.

Since the endless track 30 includes the above-described track link with flange 10, the endless track 30 has the same effects as that of the track link with flange 10 as discussed ahove. That is, a sufficient area for the shoe-bolt holes is ensured thereby improving the fastening strength between the shoe 40 and the track link with flange 10.

Next, a method for producing a track link with flange for an endless track according to an embodiment of the present invention, in a case where an angle member is used as a material for a track link with flange, will be explained, with reference to FIGS. 9, and 12 -15.

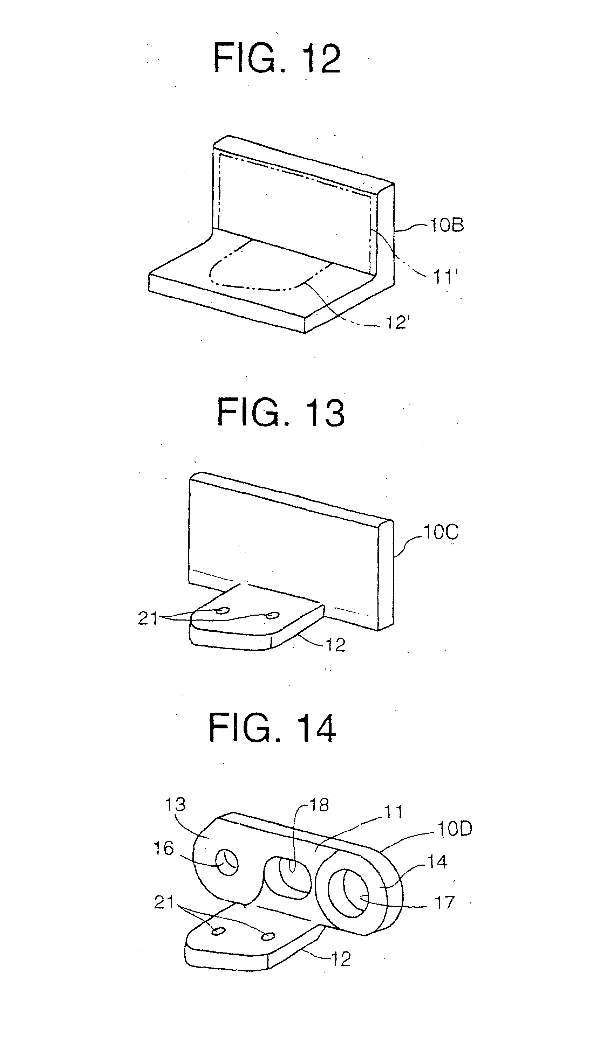

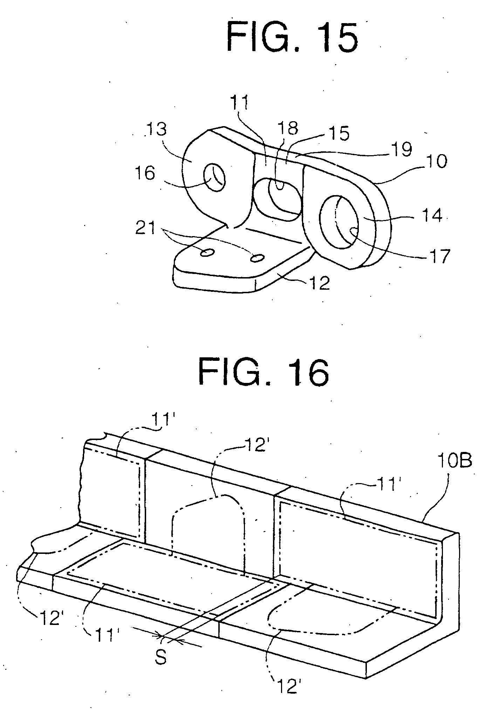

The method for producing a track link with flange for an endless track according to an embodiment of the present invention includes the steps of: providing an angle 10A manufactured by rolling as a material for a track link with flange, as illustrated in FIG. 9; cutting the angle 10A into a plurality of angle members 10B each having two legs and a predetermined length which is the same as a length of a straightly developed link which will be obtained when a final, bent link is straightly developed, as illustrated in FIG. 12; removing two opposite end portions in a longitudinal direction of one of the two legs of the angle members 10B (i.e., the leg which is formed into the flange) by punching, and punching shoe-bolt holes 21 in a remaining portion of the one leg, thereby forming the one leg into the flange 12 (the angle member in this state will he called as an angle member 10C), as illustrated in FIG. 13; removing a portion of another leg of the two legs of the angle member 10C outside a configuration of the link by punching and punching the pin hole 16, the bushing hole 17, and the mud hole 18 in a remaining portion of the another leg, thereby forming the another leg into the link 11 having two opposite end portions and an intermediate portion (the angle member in this state will he called as an angle member 10D), as illustrated in FIG. 14; and bending the link 11 at a connecting portion between each end portion 13 and 14 of the two opposite end portions and the intermediate portion 15 of the link 11 such that the two opposite end portions 13 and 14 are maintained parallel with each other and are inclined with respect to the intermediate portion 15, as illustrated in FIG. 15. The pin hole 16 and the bushing hole 17 may be machined after the step of punching depending on the quality level required.

As illustrated in FIG. 12, the step of cutting may he replaced by a step of cutting illustrated in FIG. 16. At the step of cutting of FIG. 12, a direction of a flange corresponding portion 12' of the angle member 10B where the flange 12 is formed with respect to a link corresponding portion 11' of the angle member 10B where the link 11 is formed is identical with each other between adjacent angle members 10B. On the other hand, at the step of cutting of FIG. 16, the direction of the flange corresponding portion 12' of the angle member 10B with respect to the corresponding portion 11' of the angle member 10B is opposite to each other between adjacent angle members. At the cutting step of FIG. 16, end portions of the link corresponding portions 11' of the adjacent angle members 10B arc overlapped with each other in the longitudinal direction of the angle member 10B by a overlapping quantity S. Due to this cutting, an yield ratio of the angle member 10B is improved.

As a manufacturing example, a track link with flange having a link pitch of 101.6 mm used for an excavator having a weight of 2.0 - 4.0 tons was manufactured. An angle having a thickness (T) of 10 mm, a radius (R) of 4 mm, and two legs of an equal length of 70 mm was used for the material. The angle was cut into the angle member 10A having a length of 160 mm by means of press cutting. The shoe-bolt holes of 16 mm in diameter were punched in the flange 12. The track links with flange were mounted to an excavator having a weight of 3.5 tons, and an endurance test for 100 hours was conducted. The test results showed that no quality problems resulted.

As illustrated in FIG. 9, each of the side surfaces of the link 11 is connected to the roller contact surface 19, respectively, via a corner having a radius (R), and the side surfaces define a thickness (T) of the link 11 therebetween. The following relationship holds between R and T: R ≦ (T 2 - 1). With this relationship, a necessary flat area required for the roller contact surface 19 is obtained.

Further, in the case where the angle member 10A is used for a material of the track link with flange, welding and bending of the steel plate are not necessary for forming the flange 12. Therefore, the flange 12 having a sufficient area and a good rectangularity and flatness with respect to the link 11 can he easily manufactured, so that the fastening strength with the shoe 40 is improved.

In the production method according to another embodiment of the present invention where a bent member 10E is used as a material for the track link with flange 10, the production steps of FIGS. 13 , 14 and 15 are the same as those of the production method using an angle member as the material, except the steps of FIGS. 9 and 12.

More particularly, as illustrated in FIGS. 10, 13, 14, and 15, the production method according to the embodiment of the present invention in which the track link with flange is made from the bent member 10E formed by bending a steel plate, includes: providing a steel plate as a material for a track link with flange 10; cutting the steel plate into a plurality of steel plate members each having a predetermined length and two half-width portions; removing two opposite end portions of one half-width portion of the two half-width portions of the steel plate member by punching and punching shoe-bolt holes in a remaining portion of the one half-width portion thereby forming the one half-width portion into a flange 12; removing a portion of another half-width portion of the two half-width portions outside a configuration of a link by punching and punching a pin hole 16, a bushing hole 17, and a mud hole 18 in a remaining portion of the another half-width portion thereby forming the another half-width portion into a link 11 having two opposite end portions 13 and 14 and an intermediate portion 15; bending the steel plate member at a central portion in a width direction of the steel plate member at a right angle to form a bent member 10E; and bending the link at a connecting portion between each portion of the two opposite end portions 13, 14 of the link 11 and the intermediate portion 15 of the link 11 such that the two opposite end portions 13, 14 are maintained parallel with each other and are inclined with respect to the intermediate portion 15.

Similar to the case where the angle member 10A is used as the material for the track link with a flange, a direction of a flange corresponding portion of the steel plate member where the flange 12 is to be formed with respect to a link corresponding portion of the steel plate member where the link 11 is to he formed may he identical with each other, or opposite to each other. between adjacent steel plate members.

As illustrated in FIGS. 11, 13 - 15, the production method according to the present invention in which a track link with flange is made from a welded member 10F includes: providing a first steel plate and a second steel plate as a material for a track link with flange 10; punching out a flange corresponding portion where a flange is to be formed from the first steel plate and punching shoe-bolt holes 21 therein, thereby forming the first steel plate into a flange 12, and punching out a link corresponding portion where a link is to he formed from the second steel plate and punching a pin hole 16, a bushing hole 17, and a mud hole 18 therein, thereby forming the second steel plate into a link 11 having two opposite end portions 13 and 14 and an intermediate portion 15 located between the two opposite end portions 13 and 14, and then bending the link 11 at a connecting portion between each of the two opposite end portions 13 and 14 of the link 11 and an intermediate portion 15 of the link 11 such that the two opposite end portions 13 and 14 are maintained parallel with each other and are inclined with respect to the intermediate portion 15; and welding the flange 12 at a right angle with the intermediate portion 15 of the link 11.

According to the track link with flange according to the present invention, the following technical advantages can he obtained:

First, since the flange is formed integrally with the link and the shoe-bolt holes are formed in the flange, a contact surface of the track link with flange with the shoe can be increased. by selecting a size of the flange, than in the case where the shoe-bolt holes are formed in the link, so that a fastening strength of the link with flange with the shoe is increased. Further, by selecting the pitch of the shoe-bolt holes, various kinds of shoes having different bolt-hole pitches can be fastened to the link with flange.

Second, in the case where an angle member is used for the material of the track link with flange, there is no fear of initiation of a crack at weld defects unlike in the case where the link and the flange are welded together. Further, the sharpness of an outside corner between the flange and the link, the rectangularity between the flange and the link, and flatness of the shoe-contact surface of the flange are obtained, which is preferable from the viewpoint of the fastening strength.

Third, in the case where a bent member is used for the material of the track link with flange, a steel plate (which includes a band steel), which is cheap. can be used as the material for the track link with flange.

Fourth, in the case where a welded member made by welding a first steel plate (including band steel) to a second steel plate (including band steel) is used for the material of the track link with flange, the sharpness of an outside corner between the flange and the link, and the rectangularity between the flange and the link can be obtained.

Fifth, in the case where the relationship of R ≦ (T / 2 - 1) holds, a necessary area and flatness can be provided to the roller contact surface of the track link with flange.

According to the endless track according to the present invention, the following technical advantages can be obtained:

First, since the track link with flange is used, even if the track link with flange is used for fastening the shoes having the metal plate and the elastic member fixed to the metal plate so as to cover the ground opposing surface of the metal plate, by selecting a size of the flange, the shoe-contact surface of the flange can he wide, so that fastening strength of the track link with flange with the shoe can he large. As a result, welding the link with flange to the metal plate of the shoe is unnecessary and there is no fear of thermal damage with the elastic member of the shoe, which would happen if the link with flange were fastened to the shoe by welding.

Second, in the case where an angle member is used for the material of the track link with flange of the endless track, there is no fear of initiation of a crack at weld defects unlike in the case where the link and the flange are welded together. Further, the sharpness of an outside corner between the flange and the link, the rectangularity between the flange and the link, and flatness of the shoe-contact surface of the flange are obtained, which is preferable from the viewpoint of the fastening strength.

Third, in the case where a bent member is used for the material of the track link with flange of the endless track, a steel plate (which includes a band steel), which is cheap, can be used as the material for the track link with flange.

Fourth, in the case where a welded member made by welding a first steel plate (including band steel) to a second steel plate (including band steel) is used for the material of the track link with flange of the endless track, the sharpness of an outside comer between the flange and the link, the rectangularity between the flange and the link can be obtained.

Fifth, in the case where the relationship of R ≦ (T / 2 - 1) holds with respect to the track link with flange of the endless track, a desired area and flatness can be provided to the roller contact surface of the track link with flange.

Sixth, in the case where the metal plate of the shoe is made from low-carbon boron steel containing 0.05 - 0.30 % by weight to which heat-treatment including quench-hardening only (not including tempering) is applied, a metal plate of a low cost having a high strength and toughness can be manufactured.

According to the method for producing a track link with flange for an endless track according to the present invention where an angle member is used for the material for the track link with flange, the following technical advantages can be obtained.

First, since the angle member is used for the material of the track link with flange, by selecting a size of the flange, the shoe-contact surface of the flange can be wide, so that fastening strength of the track link with flange with the shoe can be large. As a result, welding the track link with flange to the metal plate of the shoe is unnecessary, and there is no tear of thermal damage to the elastic member of the shoe, which would happen if the link with flange were fastened to the shoe by welding.

Second, in the case where the direction of the flange corresponding portion to the link corresponding portion is opposite to each other between adjacent angle members, the yield ratio of the material (angle) can be improved.

According to the method for producing a track link with flange for an endless track according to the present invention where a bent member is used for the material for the track link with flange, the following technical advantages can be obtained:

First, since the bent member is used for the material of the track link with flange, by selecting a size of the flange, the shoe-contact surface of the flange can be wide, so that fastening strength of the track link with flange with the shoe can be large. As a result, welding the track link with flange to the metal plate of the shoe is unnecessary and there is no fear of thermal damage to the elastic member of the shoe, which would happen if the link with flange were fastened to the shoe by welding. Further, the bent member is used for the material for the track link with flange, a steel plate (including a band steel), which is cheap, can be used for the material for the track link with flange.

Second, in the case where the direction of the flange corresponding portion to the link corresponding portion is opposite to each other between adjacent angle members, the yield ratio of the material (steel plate) can be improved.

According to the method for producing a track link with flange for an endless track according to the present invention where a welded member is used for the material for the track link with flange, the following technical advantages can be obtained.

Since the welded member is used for the material of the track link with flange, by selecting a size of the flange, the shoe-contact surface of the flange can be wide, so that fastening strength of the track link with flange with the shoe can be large. As a result, welding the track link with flange to the metal plate of the shoe is unnecessary and there is no fear of thermal damage to the elastic member of the shoe; which would happen if the link with flange were fastened to the shoe by welding. Further, the welded member is used for the material for the track link with flange, a sharpness of the outside comer between the flange and the link, and a rectangularity between the flange and the link can he obtained.

## Claims

1. A track link with flange (10) for an endless track comprising:
a link (11) having a flange (12) integrally formed with said link (11),
wherein said link (11) includes:
two opposite end portions (13, 14) parallel with each other and displaced from each other in a thickness direction of said link (11), one of said two opposite end portions (13, 14) including a pin hole (16) punched therein and another of said two opposite end portions (13, 14) including a bushing hole (17) punched therein; and
an intermediate portion (15) located between said two opposite end portions (13, 14) and inclined with respect to said two opposite end portions (13, 14), said intermediate portion (15) being integrally formed with said two opposite end portions (13, 14),
said flange (12) being at a right angle with respect to said intermediate portion (15) of said link (11) at a connecting portion with said intermediate portion (15) of said link and including shoe-bolt holes (21) formed therein, **characterised in that** said flange (12) having said shoe-bolt holes therein extends continuously from said intermediate portion at a right angle with respect to said intermediate portion.

2. A track link with flange (10) for an endless track according to claim 1, wherein said track link with flange (10) is made from an angle member (10A) having two legs (10A-1, 10A-2), and one leg (10A-1) of said angle member (10A) is formed into said link (11), while another leg (10A-2) of said angle member (10A) is formed into said flange (12).

3. A track link with flange (10) for an endless track according to claim 1, wherein said track link with flange (10) is made from a bent member (10E), formed by bending a steel plate at a central portion in a width direction of said steel plate at a right angle, said bent member (10E) having two half-width portions, one half-width portion of said bent member (10E) is formed into said link (11), while another half-width portion of said bent member (10E) is formed into said flange (12).

4. A track link with flange (10) for an endless track according to claim 1, wherein said track link with flange (10) is made from a welded member (10F) including a first steel plate and a second steel plate welded at a right angle to the first steel plate, said welded member (10F) having two legs, one leg of said welded member (10F) is formed into said link (11), while another leg of said welded member (10F) is formed into said flange (12).

5. A track link with flange (10) according to any one of claims 1 to 4, wherein said link (11) has a roller contact surface (19) at an end of said link (11) opposite to another end where said flange (12) is integrated with said link (11), and side surfaces (22, 23) each connected to said roller contact surface (19) via comers having a radius (R), said side surfaces (22, 23) defining a thickness (T) of said link (11) therebetween, and wherein the relationship between said radius (R) and said thickness (T) is R ≦ (T / 2 - 1).

6. An endless track (30) comprising:
a plurality of track links with flange (10) as defined in any one of the preceding claims endlessly connected with each other by a pin (31) and a bushing (32); and
a plurality of shoes (40) each fastened to each of said plurality of track links with flange (10),
each of said plurality of shoes (40) including:
a metal plate (41) having a ground opposing surface (43); and
an elastic member (42) fixed to said metal plate (41) so as to cover at least a portion of said ground opposing surface (43) of said metal plate (41),
each of said plurality of shoes (40) being fastened to each of said track links with flange (10) by bolts (47) extending through said shoe-bolt holes (21) and nuts (46) threaded to said bolts (47).

7. An endless track (30) according to claim 6, wherein said metal plate (41) of each of said plurality of shoes (40) is made from low-carbon boron steel containing 0.05 - 0.30 % carbon by weight and is heat-treated by a heat-treatment including quench-hardening only.

8. A method for producing a track link with flange (10) for an endless track comprising:
providing an angle (10A) as a material for a track link with flange (10) ;
cutting said angle (10A) into a plurality of angle members (10B) each having a predetermined length and two legs;
removing two opposite end portions of one leg of said two legs of said angle member (10B) by punching and punching shoe-bolt holes (21) in a remaining portion of said one leg, thereby forming said one leg into a flange (12), having said shoe-bolt holes therein and which extends continuously at a right angle from the other leg, and removing a portion of the other leg of said two legs of said angle member (10C) outside a configuration of a link (11) by punching and punching a pin hole (16), a bushing hole (17), and a mud hole (18) in a remaining portion of said another leg, thereby forming said other leg into a link (11) having two opposite end portions (13, 14) and an intermediate portion (15); and
bending said link (11) at a connecting portion between each of said two opposite end portions (13, 14) of said link (11) and said intermediate portion (15) of said link (11) such that said two opposite end portions (13, 14) are maintained parallel with each other and are inclined with respect to said intermediate portion (15).

9. A method according to claim 8, wherein during said cutting of said angle (10A), a direction of a flange corresponding portion (12') of said angle member (10B) where said flange is to be formed with respect to a link corresponding portion (11') of said angle member (10B) where said link (11) is to be formed is identical with each other between adjacent angle members (10B).

10. A method according to claim 8, wherein during said cutting of said angle (10A), a direction of a flange corresponding portion (12') of said angle member (10B) where said flange (12) is to be formed with respect to a link corresponding portion (11') of said angle member (10B) where said link (11) is to be formed is opposite to each other between adjacent angle members (10B).

11. A method for producing a track link with flange (10) for an endless track comprising:
providing a steel plate as a material for a track link with flange (10);
cutting said steel plate into a plurality of steel plate members each having a predetermined length and two half-width portions;
removing two opposite end portions of one half-width portion of said two half-width portions of said steel plate member by punching and punching shoe-bolt holes (21) in a remaining portion of said one half-width portion, thereby forming said one half-width portion into a flange (12), and removing a portion of another half-width portion of said two half-width portions of said steel plate member outside a configuration of a link (11) by punching and punching a pin hole (16), a bushing hole (17), and a mud hole (18) in a remaining portion of said another half-width portion, thereby forming said another half-width portion into a link (11) having two opposite end portions (13, 14) and an intermediate portion (15); and
bending said steel plate member at a central portion in a width direction of said steel plate member at a right angle such that the flange (12) has said shoe-bolt holes (21) therein and extends continuously at a right angle from said another half-width portion, and bending said link (11) at a connecting portion between each of said two opposite end portions (13, 14) of said link (11) and said intermediate portion (15) of said link (11) such that said two opposite end portions (13, 14) are maintained parallel with each other and are inclined with respect to said intermediate portion (15).

12. A method according to claim 11, wherein during said cutting of said steel plate, a direction of a flange corresponding portion (12') of said steel plate member where said flange (12) is to be formed with respect to a link corresponding portion (11') of said steel plate member where said link (11) is to be formed is identical with each other between adjacent steel plate members.

13. A method according to claim 11, wherein during said cutting of said steel plate, a direction of a flange corresponding portion (12') of said steel plate member where said flange (12) is to be formed with respect to a link corresponding portion (11') of said steel plate member where said link (11) is to . be formed is opposite to each other between adjacent steel plate members.

14. A method for producing a track link with flange (10) for an endless track comprising:
providing a first steel plate and a second steel plate as a material for a track link with flange (10);
punching out a flange corresponding portion (12') where a flange (12) is to be formed from said first steel plate and punching shoe-bolt holes (21) therein, thereby forming said first steel plate into a flange (12), and punching out a link corresponding portion (11') where a link (11) is to be formed from said second steel plate and punching a pin hole (16), a bushing hole (17), and a mud hole (18) therein, thereby forming said second steel plate into a link (11) having two opposite end portions (13, 14) and an intermediate portion (15) located between said two opposite end portions (13, 14);
bending said link (11) at a connecting portion between each of said two opposite end portions (13, 14) of said link (11) and said intermediate portion (15) of said link (11) such that said two opposite end portions (13, 14) are maintained parallel with each other and are inclined with respect to the intermediate portion (15); and
welding said flange (12) with said intermediate portion (15) of said link (11), such that the flange having said shoe-bolt holes therein extends continuously from said intermediate portion at a right angle with respect to said intermediate portion.

## Patentansprüche

1. Raupenglied mit Schenkelflansch (10) für eine Raupenkette, umfassend:
ein Glied (11), das einen einstückig mit dem Glied (11) ausgebildeten Schenkelflansch (12) aufweist, worin das Glied (11) umfasst:
zwei einander gegenüberliegende Endabschnitte (13, 14), die zueinander parallel verlaufen und voneinander in einer Dickenrichtung des Glieds (11) versetzt sind, wobei einer der beiden einander gegenüberliegenden Endabschnitte (13, 14) ein in diesen eingestanztes Stiftloch (16) umfasst und der andere der beiden einander gegenüberliegenden Endabschnitte (13, 14) ein in diesen eingestanztes Durchführungsloch (17) umfasst; sowie
einen Mittelabschnitt (15), der sich zwischen den beiden einander gegenüberliegenden Endabschnitten (13, 14) befindet und in Bezug auf die beiden einander gegenüberliegenden Endabschnitte (13, 14) geneigt ist, wobei der Mittelabschnitt (15) einstückig mit den beiden einander gegenüberliegenden Endabschnitten (13, 14) ausgebildet ist,
wobei sich der Schenkelflansch (12) an einem Verbindungsabschnitt mit dem Mittelabschnitt (15) des Glieds in einem rechten Winkel in Bezug auf den Mittelabschnitt (15) des Glieds (11) befindet und in diesem ausgebildeten Schuh-Botzenlöchern (21) umfasst, **dadurch gekennzeichnet, dass** sich der Schenkelflansch (12) mit den in diesem ausgebildeten Schuh-Bolzenlöchern kontinuierlich vom Mittelabschnitt in einem rechten Winkel in Bezug auf den Mittelabschnitt erstreckt.

2. Raupenglied mit Schenkelflansch (10) für eine Raupenkette nach Anspruch 1, worin das Raupenglied mit Schenkelflansch (10) aus einem Winkelelement (10A) mit zwei Schenkeln (10A-1, 10A-2) besteht und aus einem Schenkel (10A-1) des Winkelelements (10A) das Glied (11) geformt ist, während aus dem anderen Schenkel (10A-2) des Winkelelements (10A) der Schenkelflansch (12) gebildet ist.

3. Raupenglied mit Schenkelflansch (10) für eine Raupenkette nach Anspruch 1, worin das Raupenglied mit Schenkelflansch (10) aus einem gebogenen Element (10E) besteht, das geformt ist, indem eine Stahlplatte in einem mittleren Abschnitt in einer Breitenrichtung der Stahlplatte in einem rechten Winkel gebogen ist, wobei das gebogene Element (10E) zwei Abschnitte mit halber Breite aufweist, wobei aus einem Abschnitt mit halber Breite des gebogenen Elements (10E) das Glied (11) geformt ist, während aus dem anderen Abschnitt mit halber Breite des gebogenen Elements (10E) der Schenkelflansch (12) geformt ist.

4. Raupenglied mit Schenkelflansch (10) für eine Raupenkette nach Anspruch 1, worin das Raupenglied mit Schenkelflansch (10) aus einem geschweißten Element (10F) besteht, das eine erste Stahlplatte und eine zweite Stahlplatte umfasst, die in einem rechten Winkel an die erste Stahlplatte geschweißt ist, wobei das geschweißte Element (10F) zwei Schenkel aufweist, wobei aus einem Schenkel des geschweißten Elements (10F) das Glied (11) gebildet ist, während aus dem anderen Schenkel des geschweißten Elements (10F) der Schenkelflansch (12) gebildet ist.

5. Raupenglied mit Schenkelflansch (10) nach einem der Ansprüche 1bis 4, worin das Glied (11) eine Rollenkontaktfläche (19) an einem Ende des Glieds (11), das dem anderen Ende gegenüberliegt, aufweist, wo der Schenkelflansch (12) einstückig mit dem Glied (11) verbunden ist, sowie Seitenflächen (22, 23), die über Ecken mit einem Radius (R) jeweils mit der Rollenkontaktfläche (19) verbunden sind, wobei die Seitenflächen (22, 23) eine Dicke (T) des Glieds (11) zwischen diesen definieren, und worin die Beziehung zwischen dem Radius (R) und der Dicke (T) folgende ist: R ≤(T/2-1).

6. Raupenkette (30), umfassend:
eine Vielzahl von Raupengliedern mit Schenkelflansch (10) nach einem der vorangegangenen Ansprüche, die durch einen Stift (31) und eine Durchführung (32) endlos miteinander verbunden sind; sowie
eine Vielzahl von Schuhen (40), die jeweils an jedem der Vielzahl von Raupengliedern mit Schenkelflansch (10) befestigt sind,
wobei jeder der Vielzahl von Schuhen (40) umfasst:
eine Metallplatte (41) mit einer dem Boden gegenüberliegenden Oberfläche (43); und
ein elastisches Glied (42), das so an der Metallplatte (41) befestigt ist, dass es zumindest einen Abschnitt der dem Boden gegenüberliegenden Oberfläche (45) der Metallplatte (41) bedeckt,
wobei jeder der Vielzahl von Schuhen (40) an jedem der Raupenglieder mit Schenkelflansch (10) durch Bolzen (47) befestigt ist, die sich durch die Schuh-Bolzenlöcher (21) und an die Bolzen (47) angeschraubte Muttern (46) erstrecken.

7. Raupenkette (30) nach Anspruch 6, worin die Metallplatte (41) eines jeden der Vielzahl von Schuhen (40) aus kohlenstoffarmem Borstahl besteht, der 0,05 bis 0,30 Gew.-% Kohlenstoff enthält und durch eine Wärmebehandlung wärmebehandelt ist, die nur Abschreckhärten umfasst.

8. Verfahren zur Herstellung eines Raupenglieds mit Schenkelflansch (10) für eine Raupenkette, umfassend:
das Bereitstellen eines Winkels (10A) als Material für ein Raupenglied mit Schenkelflansch (10);
das Schneiden des Winkels (10A) in eine Vielzahl von Winkelelementen (10B), die jeweils eine vorbestimmte Länge und zwei Schenkel aufweisen;
das Entfernen von zwei einander gegenüberliegenden Endabschnitten eines Schenkels der beiden Schenkel des Winkelelements (10B) durch Stanzen und das Stanzen von Schuh-Bolzenlöchern (21) in einen verbleibenden Abschnitt des einen Schenkels, wodurch aus dem einen Schenkel ein Schenkelflansch (12) gebildet wird, in dem sich die Schuh-Bolzenlöcher befinden und der sich kontinuierlich in einem rechten Winkel vom anderen Schenkel weg erstreckt, sowie das Entfernen eines Abschnitts des anderen Schenkels der beiden Schenkel des Winkelelements (10C) außerhalb einer Konfiguration eines Glieds (11) durch Stanzen und das Stanzen eines Stiftlochs (16), eines Durchführungslochs (17) und eines Schlammlochs (18) in einen verbleibenden Abschnitt des anderen Schenkels, wodurch aus dem anderen Schenkel ein Glied (11) mit zwei einander gegenüberliegenden Endabschnitten (13, 14) und einem Mittelabschnitt (15) gebildet wird; sowie
das Biegen des Glieds (11) an einem Verbindungsabschnitt zwischen jedem der beiden einander gegenüberliegenden Endabschnitte (13, 14) des Glieds (11) und dem Mittelabschnitt (15) des Glieds (11), so dass die beiden einander gegenüberliegenden Endabschnitte (13, 14) parallel zueinander gehalten werden und in Bezug auf den Mittelabschnitt (15) geneigt sind.

9. Verfahren nach Anspruch 8, worin während des Schneidens des Winkels (10A) eine Richtung eines dem Schenkelflansch entsprechenden Abschnitts (12') des Winkelelements (10B), wo der Schenkelflansch auszubilden ist, in Bezug auf einen dem Glied entsprechenden Abschnitt (11') des Winkelelements (10B), wo das Glied (11) auszubilden ist, zwischen benachbarten Winkelelementen (10B) identisch ist.

10. Verfahren nach Anspruch 8, worin während des Schneidens des Winkels (10A) eine Richtung eines dem Schenkelflansch entsprechenden Abschnitts (12') des Winkelelements (10B), wo der Schenkelflansch auszubilden ist, in Bezug auf einen dem Glied entsprechenden Abschnitt (11') des Winkelelements (10B), wo das Glied (11) auszubilden ist, zwischen benachbarten Winkelelementen (10B) entgegengesetzt ist.

11. Verfahren zur Herstellung eines Raupenglieds mit Schenkelflansch (10) für eine Raupenkette, umfassend:
das Bereitstellen einer Stahlplatte als Material für ein Raupenglied mit Schenkelflansch (10);
das Schneiden der Stahlplatte in eine Vielzahl von Stahlplattenelementen, die jeweils eine vorbestimmte Länge und zwei Abschnitte halber Breite aufweisen;
das Entfernen von zwei einander gegenüberliegenden Endabschnitten eines Abschnitts mit halber Breite der beiden Abschnitte mit halber Breite des Stahlplattenelements durch Stanzen und das Stanzen von Schuh-Bolzenlöchern (21) in einen verbleibenden Abschnitt des einen Abschnitts mit halber Breite, wodurch aus dem einen Abschnitt mit halber Breite ein Schenkelflansch (12) gebildet wird, und das Entfernen eines Abschnitts des anderen Abschnitts mit halber Breite der beiden Abschnitte mit halber Breite des Stahlplattenelements außerhalb einer Konfiguration eines Glieds (11) durch Stanzen und das Stanzen eines Stiftlochs (16), einen Durchführungslochs (17) und eines Schlammlochs (18) in einen verbleibenden Abschnitt des anderen Abschnitts mit halber Breite, wodurch aus dem anderen Abschnitt mit halber Breite ein Glied (11) gebildet wird, das zwei einander gegenüberliegende Endabschnitte (13, 14) und einen Mittelabschnitt (15) aufweist; und
das Biegen des Stahlplattenelements in einem mittleren Abschnitt in einer Breitenrichtung des Stahlplattenelements in einem rechten Winkel, so dass der Schenkelflansch (12) die Schuh-Bolzenlöcher (21) in diesem aufweist und sich kontinuierlich in einem rechten Winkel vom anderen Abschnitt mit halber Breite aus erstreckt, und das Biegen des Glieds (11) in einem Verbindungsabschnitt zwischen jedem der beiden einander gegenüberliegenden Endabschnitte (13, 14) des Glieds (11) und dem Mittelabschnitt (15) des Glieds (11), so dass die beiden einander gegenüberliegenden Endabschnitte (13, 14) parallel zueinander gehalten werden und in Bezug auf den Mittelabschnitt (15) geneigt sind.

12. Verfahren nach Anspruch 11, worin während des Schneidens der Stahlplatte eine Richtung eines dem Schenkelflansch entsprechenden Abschnitts (12') des Stahlplattenelements, wo der Schenkelflansch (12) auszubilden ist, in Bezug auf einen dem Glied entsprechenden Abschnitt (11') des Stahlplattenelements, wo das Glied (11) auszubilden ist, zwischen benachbarten Stahlplattenelementen identisch ist.

13. Verfahren nach Anspruch 11, worin während des Schneidens der Stahlplatte eine Richtung eines dem Schenkelflansch entsprechenden Abschnitts (12') des Stahlplattenelements, wo der Schenkelflansch (12) auszubilden ist, in Bezug auf einen dem Glied entsprechenden Abschnitt (11') des Stahlplattenelements, wo das Glied (11) auszubilden ist, zwischen benachbarten Stahlplattenelementen entgegengesetzt ist.

14. Verfahren zur Herstellung eines Raupenglieds mit Schenkelflansch (10) für eine Raupenkette, umfassend:
das Bereitstellen einer ersten Stahlplatte und einer zweiten Stahlplatte als Material für ein Raupenglied mit Schenkelflansch (10);
das Ausstanzen eines dem Schenkelflansch entsprechenden Abschnitts (12'), wo ein Schenkelflansch (12) auszubilden ist, aus der ersten Stahlplatte und das Einstanzen von Schuh-Bolzenlöchern (21) in diesen, wodurch aus der ersten Stahlplatte ein Schenkelflansch (12) gebildet wird, und das Ausstanzen eines dem Glied entsprechenden Abschnitts (11'), wo ein Glied (11) auszubilden ist, aus der zweiten Stahlplatte und das Einstanzen eines Stiftlochs (16), eines Durchführungslochs (17) und eines Schlammlochs (18) in diesen, wodurch aus der zweiten Stahlplatte ein Glied (11) gebildet wird, das zwei einander gegenüberliegende Endabschnitte (13, 14) und einen Mittelabschnitt (15) aufweist, der sich zwischen den beiden einander gegenüberliegenden Endabschnitten (13, 14) befindet;
das Biegen des Glieds (11) an einem Verbindungsabschnitt zwischen jedem der beiden einander gegenüberliegenden Endabschnitte (13, 14) des Glieds (11) und dem Zwischenabschnitt (15) des Glieds (11), so dass die beiden einander gegenüberliegenden Endabschnitte (13, 14) parallel zueinander gehalten werden und in Bezug auf den Mittelabschnitt (15) geneigt sind; und
das Schweißen des Schenkelflansches (12) mit dem Zwischenabschnitt (15) des Glieds (11), so dass der Schenkelflansch, in dem sich die Schuh-Bolzenlöcher befinden, kontinuierlich vom Zwischenabschnitt in einem rechten Winkel in Bezug auf den Zwischenabschnitt erstreckt.

## Revendications

1. Maillon de chenille avec flasque (10) pour une chenille sans fin comprenant :
un maillon (11) comportant un flasque (12) formé d'un seul tenant avec ledit maillon (11),
dans lequel ledit maillon (11) comprend :
deux parties d'extrémité opposées (13, 14) parallèles l'une à l'autre et décalées l'une de l'autre dans une direction d'épaisseur dudit maillon (11), un trou de broche (16) étant poinçonné dans l'une desdites deux parties d'extrémités opposées (13, 14) et un trou de douille (17) étant poinçonné dans une autre desdites deux parties d'extrémités opposées (13, 14) ; et
une partie intermédiaire (15) située entre lesdites deux parties d'extrémité opposées (13, 14) et inclinée par rapport auxdites deux parties d'extrémité opposées (13, 14), ladite partie intermédiaire (15) étant formée d'un seul tenant avec lesdites deux parties d'extrémité opposées (13, 14),
ledit flasque (12) étant à angle droit par rapport à ladite partie intermédiaire (15) dudit maillon (11) au niveau d'une partie de liaison avec ladite partie intermédiaire (15) dudit maillon et des trous de boulon de patin (21) étant formés dans celui-ci, **caractérisé en ce que** ledit flasque (12) comportant lesdits trous de boulon de patin s'étend de manière continue depuis ladite partie intermédiaire à angle droit par rapport à ladite partie intermédiaire.

2. Maillon de chenille avec flasque (10) pour une chenille sans fin selon la revendication 1, dans lequel ledit maillon de chenille avec flasque (10) est réalisé à partir d'un élément angulaire (10A) comportant deux pattes (10A-1, 10A-2), et une patte (10A-1) dudit élément angulaire (10A) est formée dans ledit maillon (11), tandis qu'une autre patte (10A-2) dudit élément angulaire (10A) est formée dans ledit flasque (12).

3. Maillon de chenille avec flasque (10) pour une chenille sans fin selon la revendication 1, dans lequel ledit maillon de chenille avec flasque (10) est réalisé à partir d'un élément plié (10E), formé en pliant une plaque en acier au niveau d'une partie centrale dans le sens de la largeur de ladite plaque en acier à angle droit, ledit élément plié (10E) comportant deux parties de demi-largeur, une partie de demi-largeur dudit élément plié (10E) est formée dans ledit maillon (11), tandis qu'une autre partie de demi-largeur dudit élément plié (10E) est formée dans ledit flasque (12).

4. Maillon de chenille avec flasque (10) pour une chenille sans fin selon la revendication 1, dans lequel ledit maillon de chenille avec flasque (10) est réalisé à partir d'un élément soudé (10F) comprenant une première plaque en acier et une deuxième plaque en acier soudée à angle droit à la première plaque en acier, ledit élément soudé (10F) comportant deux pattes, une patte dudit élément soudé (10F) est formée dans ledit maillon (11), tandis qu'une autre patte dudit élément soudé (10F) est formée dans ledit flasque (12).

5. Maillon de chenille avec flasque (10) selon l'une quelconque des revendications 1 à 4, dans lequel ledit maillon (11) comporte une surface de contact de rouleau (19) à une extrémité dudit maillon (11) opposée à une autre extrémité où ledit flasque (12) est d'un seul tenant avec ledit maillon (11), et des surfaces latérales (22, 23) reliées chacune à ladite surface de contact de rouleau (19) par l'intermédiaire de coins présentant un rayon (R), lesdites surfaces latérales (22, 23) définissant une épaisseur (T) dudit maillon (11) entre elles, et dans lequel la relation entre ledit rayon (R) et ladite épaisseur (T) est R ≤ (T/2 - 1).

6. Chenille sans fin (30) comprenant :
une pluralité de maillons de chenille avec flasque (10) selon l'une quelconque des revendications précédentes reliés sans fin les uns aux autres par une broche (31) et une douille (32) ; et
une pluralité de patins (40) fixés chacun à chacun de ladite pluralité de maillons de chenille avec flasque (10),
chacun de ladite pluralité de patins (40) comprenant :
une plaque métallique (41) comportant une surface orientée vers le sol (43) ; et
un élément élastique (42) fixé à ladite plaque métallique (41) de manière à recouvrir au moins une partie de ladite surface orientée vers le sol (43) de ladite plaque métallique (41),
chacun de ladite pluralité de patins (40) étant fixé à chacun desdits maillons de chenille avec flasque (10) par des boulons (47) s'étendant à travers lesdits trous de boulon de patin (21) et des écrous (46) vissés sur lesdits boulons (47).

7. Chenille sans fin (30) selon la revendication 6, dans laquelle ladite plaque métallique (41) de chacun de ladite pluralité de patins (40) est réalisée en acier au bore à faible teneur en carbone contenant 0,05 à 0,30 % de carbone par poids et est traitée thermiquement par un traitement thermique comprenant uniquement une trempe.

8. Procédé pour produire un maillon de chenille avec flasque (10) pour une chenille sans fin comprenant :
la prévision d'un angle (10A) en tant que matériau pour un maillon de chenille avec flasque (10) ;
la découpe dudit angle (10A) en une pluralité d'éléments angulaires (10B) ayant chacun une longueur prédéterminée et deux pattes ;
le retrait de deux parties d'extrémité opposées d'une patte desdites deux pattes dudit élément angulaire (10B) par poinçonnage et le poinçonnage de trous de boulon de patin (21) dans une partie restante de ladite une patte, mettant de ce fait ladite patte en forme de flasque (12) comportant lesdits trous de boulon de patin et qui s'étend de manière continue à angle droit à partir de l'autre patte, et le retrait d'une partie de l'autre patte desdites deux pattes dudit élément angulaire (10C) à l'extérieur d'une configuration d'un maillon (11) par poinçonnage et le poinçonnage d'un trou de broche (16), d'un trou de douille (17) et d'un trou de boue (18) dans une partie restante de ladite autre patte, mettant de ce fait ladite autre patte en forme de maillon (11) comportant deux parties d'extrémité opposées (13, 14) et une partie intermédiaire (15) ; et
le pliage dudit maillon (11) au niveau d'une partie de liaison entre chacune desdites deux parties d'extrémité opposées (13, 14) dudit maillon (11) et ladite partie intermédiaire (15) dudit maillon (11) de telle sorte que lesdites deux parties d'extrémité opposées (13, 14) soient maintenues parallèles l'une à l'autre et soient inclinées par rapport à ladite partie intermédiaire (15).

9. Procédé selon la revendication 8, dans lequel, pendant ladite découpe dudit angle (10A), une direction d'une partie correspondant à un flasque (12') dudit élément angulaire (10B) où ledit flasque doit être formé par rapport à une partie correspondant à un maillon (11') dudit élément angulaire (10B) où ledit maillon (11) doit être formé est identique pour des éléments angulaires adjacents (10B).

10. Procédé selon la revendication 8, dans lequel, pendant ladite découpe dudit angle (10A), une direction d'une partie correspondant à un flasque (12') dudit élément angulaire (10B) où ledit flasque (12) doit être formé par rapport à une partie correspondant à un maillon (11') dudit élément angulaire (10B) où ledit maillon (11) doit être formé est opposée pour des éléments angulaires adjacents (10B).

11. Procédé pour produire un maillon de chenille avec flasque (10) pour une chenille sans fin comprenant :
la prévision d'une plaque en acier en tant que matériau pour un maillon de chenille avec flasque (10) ;
la découpe de ladite plaque en acier en une pluralité d'éléments de plaque en acier ayant chacun une longueur prédéterminée et deux parties de demi-largeur ;
le retrait de deux parties d'extrémité opposées d'une partie de demi-largeur desdites deux parties de demi-largeur dudit élément de plaque en acier par poinçonnage et le poinçonnage de trous de boulon de patin (21) dans une partie restante de ladite une partie de demi-largeur, mettant de ce fait ladite une partie de demi-largeur en forme de flasque (12), et le retrait d'une partie d'une autre partie de demi-largeur desdites deux parties de demi-largeur dudit élément de plaque en acier à l'extérieur d'une configuration d'un maillon (11) par poinçonnage et le poinçonnage d'un trou de broche (16), d'un trou de douille (17) et d'un trou de boue (18) dans une partie restante de ladite autre partie de demi-largeur, mettant de ce fait ladite autre partie de demi-largeur en forme de maillon (11) comportant deux parties d'extrémité opposées (13, 14) et une partie intermédiaire (15) ; et
le pliage dudit élément de plaque en acier au niveau d'une position centrale dans le sens de la largeur dudit élément de plaque en acier à angle droit de telle sorte que le flasque (12) comporte lesdits trous de boulon de patin (21) et s'étende de manière continue à angle droit à partir de ladite autre partie de demi-largeur, et le pliage dudit maillon (11) au niveau d'une partie de liaison entre chacune desdites deux parties d'extrémité opposées (13, 14) dudit maillon (11) et ladite partie intermédiaire (15) dudit maillon (11) de telle sorte que lesdites deux parties d'extrémité opposées (13, 14) soient maintenues parallèles l'une à l'autre et soient inclinées par rapport à ladite partie intermédiaire (15).

12. Procédé selon la revendication 11, dans lequel, pendant ladite découpe de ladite plaque en acier, une direction d'une partie correspondant à un flasque (12') dudit élément de plaque en acier où ledit flasque (12) doit être formé par rapport à une partie correspondant à un maillon (11') dudit élément de plaque en acier où ledit maillon (11) doit être formé est identique pour des éléments de plaque en acier adjacents.

13. Procédé selon la revendication 11, dans lequel, pendant ladite découpe de ladite plaque en acier, une direction d'une partie correspondant à un flasque (12') dudit élément de plaque en acier où ledit flasque (12) doit être formé par rapport à une partie correspondant à un maillon (11') dudit élément de plaque en acier où ledit maillon (11) doit être formé est opposée pour des éléments de plaque en acier adjacents.

14. Procédé pour produire un maillon de chenille avec flasque (10) pour une chenille sans fin comprenant :
la prévision d'une première plaque en acier et d'une deuxième plaque en acier en tant que matériau pour un maillon de chenille avec flasque (10) ;
le poinçonnage d'une partie correspondant à un flasque (12') où un flasque (12) doit être formé dans ladite première plaque en acier et le poinçonnage de trous de boulon de patin (21) dans celle-ci, mettant de ce fait ladite première plaque en acier en forme de flasque (12), et le poinçonnage d'une partie correspondant à un maillon (11') où un maillon (11) doit être formé dans ladite deuxième plaque en acier et le poinçonnage d'un trou de broche (16), d'un trou de douille (17) et d'un trou de boue (18) dans celle-ci, mettant de ce fait ladite deuxième plaque en acier en forme de maillon (11) comportant deux parties d'extrémité opposées (13, 14) et une partie intermédiaire (15) située entre lesdites deux parties d'extrémité opposées (13, 14) ;
le pliage dudit maillon (11) au niveau d'une partie de liaison entre chacune desdites deux parties d'extrémité opposées (13, 14) dudit maillon (11) et ladite partie intermédiaire (15) dudit maillon (11) de telle sorte que lesdites deux parties d'extrémité opposées (13, 14) soient maintenues parallèles l'une à l'autre et soient inclinées par rapport à la partie intermédiaire (15) ; et
le soudage dudit flasque (12) avec ladite partie intermédiaire (15) dudit maillon (11), de telle sorte que le flasque comportant lesdits trous de boulon de patin s'étende de manière continue à partir de ladite partie intermédiaire à angle droit par rapport à ladite partie intermédiaire.
